# EUROPÄISCHE PATENTSCHRIFT

(11) **EP 0 759 477 B1**
(45) Veröffentlichungstag und Bekanntmachung des Hinweises auf die Patenterteilung: **03.03.1999**
(21) Anmeldenummer: 96109298.8
(22) Anmeldetag: 11.06.1996
(51) Int. Cl.: C21D 9/30

(54) **Vorrichtung zum elektroinduktiven Härten von unmittelbar benachbart angeordneten Lagerflächen einer Kurbelwelle**
Equipment for inductive hardening of directly adjacent bearing surfaces of a crankshaft
Installation de trempe inductive des vilebrequins ayant des surfaces de palier adjacentes

(30) Priorität: 18.08.1995 DE 19530430
(43) Veröffentlichungstag der Anmeldung: 26.02.1997
(73) Patentinhaber: ELOTHERM GmbH, D-42855 Remscheid (DE)
(72) Erfinder: Gezarzick, Waldemar, Dipl.-Ing., 42857 Remscheid (DE); Von Starck, Axel, Prof. Dr.-Ing., 42859 Remscheid (DE); Stengel, Edgar, Dipl.-Ing., 42855 Remscheid (DE)
(74) Vertreter: Simons, Johannes

(56) Entgegenhaltungen:
- DE-A- 4 001 887
- DE-C- 3 613 909
- DE-C- 4 236 921
- FR-A- 1 125 965

## Beschreibung

Die Erfindung betrifft eine Vorrichtung zum elektroinduktiven Härten von unmittelbar benachbart zuneinander angeordneten Lagerflächen einer Kurbelwelle mittels einander abwechselnd diametral gegenüberliegend angeordneter, jeweils mindestens zwei bogenförmig der Krümmung der jeweiligen Lagerfläche folgende Induktoräste aufweisender Induktoren, von denen jeweils einer einer der Lagerflächen zugeordnet ist. Eine derartige Vorrichtung ist beispielsweise aus der deutschten Patentschrift DE 42 36 921 C1 bekannt. Bei der bekannten Vorrichtung weisen die einzelnen Induktorseitenäste der Induktoren eine gleiche Länge auf, welche maximal gleich der Länge des Überdeckungsbogens zwischen den Lagerflächen ist.

In Vorrichtungen der voranstehend genannten Art werden beispielsweise die unmittelbar benachbarten Hubzapfen einer Kurbelwellen zunächst gleichzeitig umlaufend mittels der Induktoren elektroinduktiv erwärmt und anschließend abgeschreckt. Durch das gleichzeitige Erwärmen der jeweils aneinander angrenzenden Zapfen wird eine gleichmäßge Härtung der Hubzapfen erreicht, ohne daß die Gefahr einer negativen gegenseitigen Beeinflussung der einzelnen Härtezonen während der Erwärmung besteht.

Problematisch ist der Einsatz der bekannten Vorrichtung zum Härten von Kurbelwellen dann, wenn die zu härtenden Lagerstellen der Kurbelwelle einen kleinen Durchmesser aufweisen. Bei derartigen Kurbelwellen erfolgt die Erwärmung der zu härtenden Bereiche immer dann mit einer nur unzureichenden Gleichförmigkeit, wenn die betreffende Lagerstelle an einer ihrer Seiten an eine Wange der Kurbelwelle angrenzt. Als Grund für die ungleichförmige Erwärmung stellte sich die höhere Wärmeableitung heraus, welche im Übergangsbereich zwischen der betreffenden Lagerstelle und der jeweiligen Wange auftritt. Diese Wärmeableitung ist höher als die Wärmeableitung im Übergangsbereich zwischen den unmittelbar benachbarten gleichzeitig erwärmten Hubzapfen oder Lagerstellen.

Zur Kompensation der größeren Wärmeableitung zwischen der betreffenden Lagerstelle und der an sie angrenzenden Wange ist vorgeschlagen worden, die Induktoren jeweils auf beiden Seiten auf unterschiedlich langen Strecken mit Dynamoblechen zu versehen. Diese Dynamobleche erhöhen in ihrem Wirkungsberech die jeweils elektrisch induzierte Leistungsdichte bei der Erwärmung. Infolge magnetischer Sättigung begrenzen die Dynamobleche aber die maximal auf die jeweilige Lagerfläche zu übertragende Leistung. Durch diese Begrenzung ist es häufig nicht möglich, die im Hinblick auf eine hohe Aufheizgeschwindigkeit wünschenswerte Erwärmungsleistung zur Verfügung zu stellen.

Die Aufgabe der Erfindung besteht darin, eine Vorrichtung der eingangs genannten Art zu schaffen, mit der bei einer hohen Leistung eine gleichmäßige Erwärmung der Lagerstellen auch dann erreicht werden kann, wenn die jeweilige Lagerstelle an eine Zone mit hoher Wärmeableitung grenzt.

Die voranstehend genannte Aufgabe wird erfindungsgemäß dadurch gelöst, daß derjenige erste Induktorseitenast der Induktoren, der der jeweils unmittelbar benachbarten Lagerstelle zugeordnet ist, eine Länge aufweist, die höchsten gleich der Länge des Überdeckungsbogens der beiden jeweils unmittelbar benachbarten Hubzapfen ist, während bei mindestens einem der Induktoren der zweite Induktorseitenast eine größere Länge als der Überdeckungsbogen der Hubzapfen aufweist.

Gemäß der Erfindung wird der ggf. vorhandene unterschiedliche Wärmeübergang zwischen der zu erwärmenden Lagerfläche und an diese angrenzende Elemente der Kurbelwelle dadurch kompensiert, daß dem Bereich mit höherem Wärmeübergang ein längerer Induktorseitenast zugeordnet ist, als dem Bereich mit relativ niedrigerem Wärmeübergang. Auf diese Weise wird in den Bereich mit höherem Wärmeübergang eine höhere Erwärmungsleistung eingebracht als in den jeweils anderen Bereich. Diese Mehrleistung ist dabei, anders als bei dem voranstehend erläuterten weiterentwickelten Stand der Technik, alleine durch die Länge des Induktorseitenastes beschränkt.

Gleichzeitig können auch mit der erfindungsgemäßen Vorrichtung uneingeschränkt unmittelbar benachbarte, aneinander stoßende Lagerflächen einer Kurbelwelle gehärtet werden. Dies wird dadurch erreicht, daß erfindungsgemäß die Länge des der jeweils unmittelbar benachbarten Lagerstelle zugeordneten Induktorseitenastes wie beim Stand der Technik auf die Länge des Überdeckungsbogens beschränkt ist. Auf diese Weise ist ausgeschlossen, daß die Induktoren bei ihrer größten Annäherung miteinander kollidieren.

Hinsichtlich der Ausgestaltung eines automatisch arbeitenden Induktors ist es günstig, wenn die Länge des zweiten Induktorseitenastes höchstens gleich dem halben Umfang des jeweiligen Hubzapfens ist. Auf diese Weise kann der Induktor problemlos auf die jeweilige Lagerstelle senkrecht zur Wellenachse aufgeschoben werden.

Zusätzlich verbessert werden kann die Kompensation des größeren Wärmeübergangs zu einer der Steiten der jeweiligen Lagerfläche dadurch, daß die einander zugeordneten Enden des ersten und des zweiten Induktorseitenastes mittels eines Verbindungsastes miteinander verbunden sind, der bei einer Aufsicht auf die Induktoräste einen spitzen Winkel zwischen sich und dem zweiten längeren Induktorseitenast einschließt.

Nachfolgend wird die Erfindung anhand einer ein Ausführungsbeispiel darstellenden Zeichnung näher erläutert. Es zeigen:

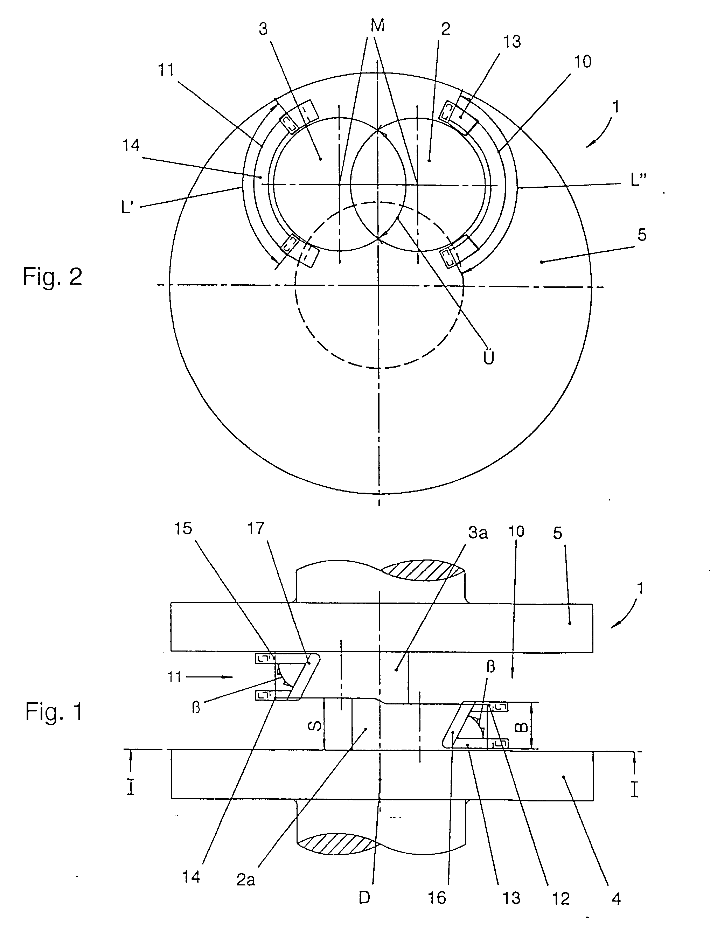

- Fig. 1: eine erste Betriebsstellung einer Kurbelwelle während des Erwärmens in einer Vorrichtung zum Härten ihrer Lagerflächen in einer ausschnittsweisen, schematischen Draufsicht;
- Fig. 2: die Betriebsstellung der Kurbelwelle nach Fig. 1 in einer frontalen Ansicht entlang der Schnittlinie I-I der Fig. 1;

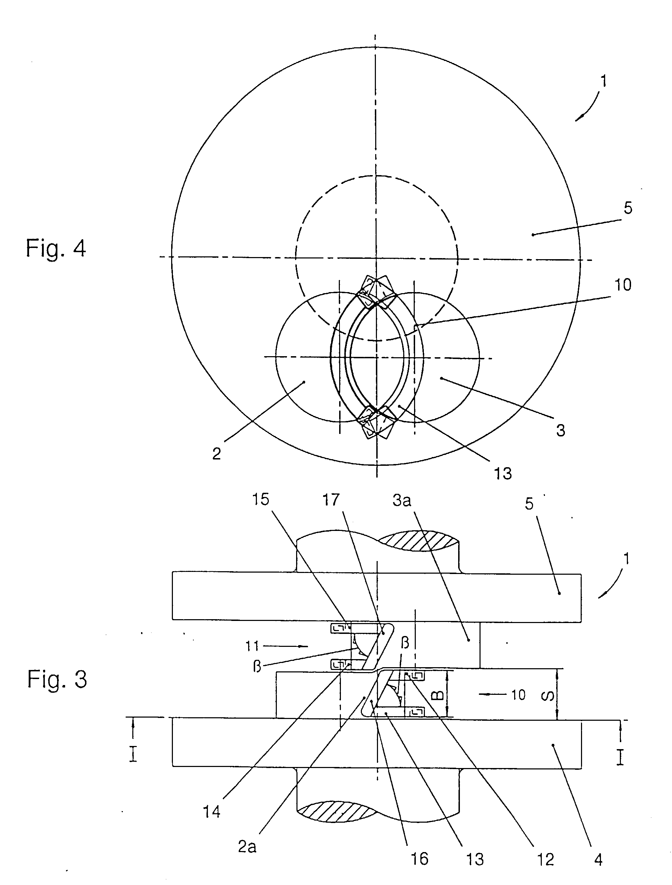

- Fig. 3: eine zweite Betriebsstellung der Kurbelwelle während des Erwärmens in der Vorrichtung zum Härten ihrer Lagerflächen in einer ausschnittsweisen, schematischen Draufsicht;
- Fig. 4: die Betriebsstellung der Kurbelwelle nach Fig. 4 in einer frontalen Ansicht entlang der Schnittlinie I-I der Fig. 3;

Die in den Figuren gezeigte Kurbelwelle 1 weist einen ersten gegenüber der Drehachse D der Kurbelwelle versetzt angeordneten Hubzapfen 2 mit einer Lagerfläche 2a auf. Der erste Hubzapfen 2 grenzt unmittelbar an einen eine Lagerfläche 3a aufweisenden zweiten Hubzapfen 3, der ebenfalls exzentrisch gegenüber der Drehachse D der Kurbelwelle 1 und zusätzlich versetzt gegenüber dem ersten Hubzapfen 2 angeordnet ist. Die Hubzapfen 2,3 grenzen mit ihrer dem jeweils anderen Hubzapfen 3,2 abgewandten Seite an jeweils eine Wange 4,5, welche bei einer annähernd gleichen Dicke einen gegenüber dem Durchmesser der Hubzapfen 2,3 einen erheblich größeren Durchmesser aufweisen.

Zum Erwärmen der Lagerflächen 2a,3a der Hubzapfen 2,3 ist jeweils ein Induktor 10,11 zur Anlage an jeweils eine der Lagerflächen 2a,3a zur Anlage gebracht. Die Breite B der Induktoren 10,11 ist kleiner als die Einstichbreite S zu einem der Hubzapfen 2,3.

Die Induktoren 10,11 weisen jeweils zwei die jeweilige Lagerfläche 2a,3a umgreifende Induktorseitenäste 12,13,14,15 auf, die an die Krümmung der jeweiligen Lagerfläche 2a,3a angepaßt sind. Die beiden Induktorseitenäste 12,13,14,15 sind jeweils paarweise symmetrisch zum Mittelpunkt M des Querschnitts des jeweiligen Hubzapfens 2,3 angeordnet.

Der erste Induktorseitenast 12,14, welcher im an die jeweilige Lagerfläche 2a,3a angelegten Zustand dem jeweils anderen Hubzapfen 3,2 benachbart ist, weist eine Länge L' auf, die annähernd gleich dem Überdeckungsbogen Ü ist, der die Grenzen des Überschnittbereichs der Hubzapfen 2,3, beschreibt. Die Länge L'' des jeweils zweiten Induktorseitenastes 13,15 welcher der jeweiligen Wange 4,5 zugeordnet ist, ist dagegen länger als die Länge L' des jeweils ersten Induktorseitenastes 12,14. Gleichzeitig ist die Länge L'' kleiner als der halbe Umfang der jeweiligen Hubzapfen 2,3, so daß es problemlos möglich ist, die Induktoren 10,11 an die jeweiligen Hubzapfen heranzufahren.

Die die beiden Enden der Induktorseitenäste 12,13,14,15 auf geradem Wege miteinander verbindenden Verbindungsäste 16,17 schließen jeweils einen spitzen Winkel β zwischen sich und dem jeweiligen zweiten Induktorseitenast 13,15 ein.

Während des umlaufend erfolgenden Erwärmens der Lagerflächen 2a,3a der Hubzapfen 2,3 wird über die längeren zweiten Induktorseitenäste 13,15 mehr Energie in den Bereich zwischen der jeweiligen Wange 4,5 und dem jeweiligen Hubzapfen 2,3 eingeleitet als in den Übergangsbereich zwischen den beiden Hubzapfen 2,3. Auf diese Weise wird die aufgrund der größeren Masse der Wangen 4,5 größere Wärmeableitung zwischen den Hubzapfen 2,3 und der jeweiligen Wange 4,5 kompensiert und eine gleichmäßige Erwärmung der Lagerflächen 2a,3a erreicht. Gleichzeitig ist dadurch, daß die ersten einander zugeordneten Induktorseitenäste 12,14 der Induktoren 10,11 eine Länge L' aufweisen, die maximal gleich der Länge des Überdeckungsbogens Ü ist, sichergestellt, daß die Induktoren 10,11 in keiner der verschiedenen Betriebsstellungen während der Erwärmung miteinander kollidieren.

## Patentansprüche

1. Vorrichtung zum elektroinduktiven Härten von unmittelbar benachbart zuneinander angeordneten Lagerflächen (2a,3a) einer Kurbelwelle (1) mittels zueinander axial versetzt diametral gegenüberliegend angeordneter, jeweils mindestens zwei bogenförmig der Krümmung der jeweiligen Lagerfläche (2a,3a) folgende Induktorseitenäste (12,13,14,15), aufweisender Induktoren (10,11), von denen jeweils einer einer der Lagerflächen (2a,3a) zugeordnet ist,
**dadurch gekennzeichnet**, **daß**
derjenige erste Induktorseitenast (12,14) der Induktoren (10,11), der der jeweils unmittelbar benachbarten Lagerfläche (3a,2a) zugeordnet ist, eine Länge (L') aufweist, die höchsten gleich der Länge des Überdeckungsbogens (Ü) der beiden jeweils unmittelbar benachbarten Lagerflächen (2a,3a) ist, während bei mindestens einem der Induktoren (10,11) der zweite Induktorseitenast (13,15) eine größere Länge (L'') als der Überdeckungsbogen (Ü) der Lagerflächen (2a,3a) aufweist.

2. Vorrichtung nach Anspruch 1, **dadurch gekennzeichnet**, **daß**, die die Länge (L'') des zweiten Induktorseitenastes (13,15) höchstens gleich dem halben Umfang der jeweiligen Lagerfläche (2a,3a) ist.

3. Vorrichtung nach Anspruch 1 oder 2, d a d u r c h **gekennzeichnet, daß** die einander zugeordneten Enden des ersten und des zweiten Induktorseitenastes (12,13,14,15) mittels jeweils eines Verbindungsastes (16,17) miteinander verbunden sind, der bei einer Aufsicht auf die Induktorseitenäste (12,13,14,15) einen spitzen Winkel (β) zwischen sich und dem zweiten Induktorseitenast (13,15) einschließt.

## Claims

1. A device for the electroinductive hardening of bearing faces (2a, 3a) of a crankshaft (1) disposed immediately adjacent one another by means of diametrically oppositely disposed inductors (10, 11) offset axially in relation to one another and each having at least two inductor side branches (12, 13, 14, 15) which follow arcuately the curvature of the particular bearing face (2a, 3a) and each of which is associated with one of the bearing faces (2a, 3a), **characterised in that** that first inductor side branch (12, 14) of the inductors (10, 11) which is associated with the particular immediately adjacent bearing face (3a, 2a) has a length (L') which is at most equal to the length of the registering are (Ü) of the two particular immediately adjacent bearing faces (2a, 3a), while in the case of at least one of the inductors (10, 11) the second inductor side branch (13, 15) has a greater length (L") than the registering are (Ü) of the bearing faces (2a, 3a).

2. A device according to claim one, **characterised in that** the length (L") of the second inductor side branch (13, 15) is at most equal to half the periphery of the particular bearing face (2a, 3a).

3. A device according to claims one or two, **characterised in that** the associated ends of the first and second inductor side branch (12, 13, 14, 15) are connected to one another via a connecting branch (16, 17) which, in plan view of the inductor side branches (12, 13, 14, 15), encloses an acute angle (β) between itself and the second inductor side branch (13, 15).

## Revendications

1. Dispositif pour durcir par électro-induction des surfaces de palier (2a, 3a) directement adjacentes l'une à l'autre d'un vilebrequin (1) au moyen d'inducteurs (10, 11) décalés axialement l'un par rapport à l'autre, disposés diamétralement en vis-à-vis et dont chacun comprend au moins deux branches latérales d'inducteur arquées (12, 13, 14, 15) qui suivent la courbure de la surface de palier (2a, 3a) associée, chaque inducteur étant associé à l'une des surfaces de palier (2a, 3a), caractérisé en ce que la première branche latérale (12, 14) des inducteurs (10, 11), qui est attribuée à la surface de palier (3a, 2a) directement adjacente, présente une longueur (L') au plus égale à la longueur de l'arc de chevauchement (Ü) des deux surfaces de paliers (2a, 3a) directement adjacentes l'une à l'autre, tandis que, pour au moins l'un des inducteurs (10, 11), la seconde branche latérale (13, 15) présente une longueur (L") supérieure à l'arc de chevauchement (Ü) des surfaces de palier (2a, 3a).

2. Dispositif suivant la revendication 1, caractérisé en ce que la longueur (L") de la deuxième branche latérale d'inducteur (13, 15) est au plus égale à la demi-circonférence de la surface de palier (2a, 3a) respective.

3. Dispositif suivant la revendication 1 ou 2, caractérisé en ce que les extrémités correspondantes de la première et de la seconde branches latérales d'inducteur (12, 13, 14, 15) sont reliées l'une à l'autre au moyen d'une branche de liaison respective (16, 17) qui, en vue de dessus des branches latérales d'inducteur (12, 13, 14, 15), forme un angle aigu (β) entre elle-même et la seconde branche latérale d'inducteur (13, 15).
